(19) Europäisches Patentamt
European Patent Office
Office européen des brevets

(11) EP 1 664 140 B1

(12) **EUROPEAN PATENT SPECIFICATION**

(45) Date of publication and mention of the grant of the patent:
**17.12.2008 Bulletin 2008/51**

(21) Application number: **04763927.3**

(22) Date of filing: **06.08.2004**

(51) Int Cl.:
***C08F 297/08*** *(2006.01)* ***C08F 2/00*** *(2006.01)*
***C08F 4/643*** *(2006.01)*

(86) International application number:
**PCT/EP2004/008903**

(87) International publication number:
**WO 2005/023892 (17.03.2005 Gazette 2005/11)**

# (54) MULTISTEP PROCESS FOR PREPARING HETEROPHASIC PROPYLENE COPOLYMERS

MEHRSCHRITTVERFAHREN ZUR HERSTELLUNG VON HETEROPHASIGEN PROPYLENCOPOLYMEREN

PROCEDE MULTI-ETAPE PERMETTANT DE PREPARER DES COPOLYMERES DE PROPYLENE HETEROPHASE

(84) Designated Contracting States:
**AT BE BG CH CY CZ DE DK EE ES FI FR GB GR HU IE IT LI LU MC NL PL PT RO SE SI SK TR**

(30) Priority: **11.09.2003 EP 03077866**
**22.09.2003 US 505037 P**

(43) Date of publication of application:
**07.06.2006 Bulletin 2006/23**

(73) Proprietor: **Basell Polyolefine GmbH**
**50389 Wesseling (DE)**

(72) Inventors:
- **PELLICONI, Anteo**
  **I-45030 Occhiobello (IT)**
- **TONTI, Maria, Silvia**
  **44100 Ferrara (IT)**
- **RESCONI, Luigi**
  **I-44100 Ferrara (IT)**

(74) Representative: **Sacco, Marco**
**Basell Poliolefine Italia S.r.l.**
**Intellectual Property**
**P.le Donegani, 12**
**44100 Ferrara (IT)**

(56) References cited:
**EP-A- 0 704 463**
**US-A1- 2003 149 200**
**US-B1- 6 492 465**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

The present invention relates to a multistep process for preparing heterophasic propylene copolymers, by using a metallocene-based catalyst.

Multistep processes for the polymerization of olefins, carried out in two or more reactors, are known from the patent literature and are of particular interest in industrial practice. The possibility of independently varying, in any reactors, process parameters such as temperature, pressure, type and concentration of monomers, concentration of hydrogen or other molecular weight regulator, provides much greater flexibility in controlling the composition and properties of the end product compared to single-step processes. Multistep processes are generally carried out using the same catalyst in the various steps/reactors. The product obtained in one reactor is discharged and sent directly to the next step/reactor without altering the nature of the catalyst.

Usually a crystalline polymer is prepared in the first stage followed by a second stage in which an elastomeric copolymer is obtained. The monomer used in the first stage is usually also used as comonomer in the second stage. This simplifies the process, for the reason that it is not necessary to remove the unreacted monomer from the first stage, but this kind of process has the drawback that only a limited range of products can be prepared.

US 5,854,354 discloses a multistep process in which a propylene polymer is prepared in step a) followed by an ethylene (co)polymer prepared in step b). This document describes that the amount of the ethylene polymer ranges from 20% to 80% by weight of the total polymer, but in the examples only compositions containing about 30% of ethylene polymer are prepared. In this document it is shown that when the comonomer used in step b) is 1-butene or higher alpha-olefins rigidity, heat resistance and impact resistance can be improved.

There is still the need to improve other properties such as haze in order to use these heterophasic propylene copolymers in applications that requires high values of transparency (low values of haze).

The applicant found that an heterophasic copolymer comprising a propylene homo or copolymer and an ethylene/1-butene or higher alpha olefins copolymer having a lower value of haze is obtainable in a two step process when the second step is carried out in the presence of hydrogen.

The multistage process according to the present invention comprises the following steps:

a) polymerizing propylene with optionally one or more monomers selected from ethylene and alpha olefins of formula $CH_2=CHT^1$, wherein $T^1$ is a $C_2$-$C_{20}$ alkyl radical in the presence of a catalysts system, supported on an inert carrier comprising:

i) a transition metal compound containing a ligand having a cyclopentadienyl skeleton;
ii) an alumoxane or a compound capable of forming an alkyl metallocene cation; and optionally
iii) an organo aluminum compound;

b) contacting, under polymerization conditions, in a gas phase, ethylene with one or more alpha olefins of formula $CH_2=CHT^1$, wherein $T^1$ is a $C_2$-$C_{20}$ alkyl radical, and optionally a non-conjugated diene, in the presence of the polymer obtained in step a) and of hydrogen, the weight ratio hydrogen/ethylene being higher than 1 ppm and optionally in the presence of an additional organo aluminum compound;

wherein the amount of the polymer obtained in step a) ranges from 5% by weight and 90% by weight of the polymer obtained in the whole process and the amount of polymer obtained in step b) ranges from 10% by weight and 95% by weight of the polymer obtained in the whole process.

Step b) is carried out in the presence of a weight ratio hydrogen/ethylene higher than 1 ppm. The weight ratio hydrogen/ethylene present during the polymerization reaction preferably ranges from 5 to 2000 ppm; more preferably from 5.8 to 500 ppm.

Preferably transition metal compounds containing a ligand having a cyclopentadienyl skeleton have formula (I)

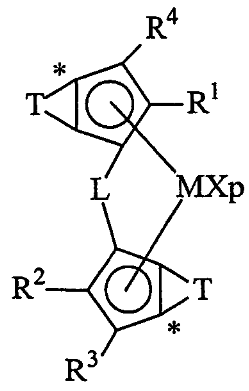

(I)

wherein:

M is an atom of a transition metal selected from those belonging to group 3, 4, 5, 6 or to the lanthanide or actinide groups in the Periodic Table of the Elements; preferably M is titanium, zirconium or hafnium;
p is an integer from 0 to 3, preferably p is 2, being equal to the formal oxidation state of the metal M minus 2;
X, same or different, is a hydrogen atom, a halogen atom, or a R, OR, $OSO_2CF_3$, OCOR, SR, $NR_2$ or $PR_2$ group, wherein R is a linear or branched, saturated or unsaturated $C_1$-$C_{20}$ alkyl, $C_3$-$C_{20}$ cycloalkyl, $C_6$-$C_{20}$ aryl, $C_7$-$C_{20}$ alkylaryl or $C_7$-$C_{20}$ arylalkyl radical, optionally containing heteroatoms belonging to groups 13-17 of the Periodic Table of the Elements; or two X can optionally form a substituted or unsubstituted butadienyl radical or a OR'O group wherein R' is a divalent radical selected from $C_1$-$C_{20}$ alkylidene, $C_6$-$C_{40}$ arylidene, $C_7$-$C_{40}$ alkylarylidene and $C_7$-$C_{40}$ arylalkylidene radicals; preferably X is a hydrogen atom, a halogen atom or a R group; more preferably X is chlorine or a methyl radical;
L is a divalent bridging group selected from $C_1$-$C_{20}$ alkylidene, $C_3$-$C_{20}$ cycloalkylidene, $C_6$-$C_{20}$ arylidene, $C_7$-$C_{20}$ alkylarylidene, or $C_7$-$C_{20}$ arylalkylidene radicals optionally containing heteroatoms belonging to groups 13-17 of the Periodic Table of the Elements, and silylidene radical containing up to 5 silicon atoms such as $SiMe_2$, $SiPh_2$; preferably L is selected from the group consisting of is $Si(CH_3)_2$, $SiPh_2$, SiPhMe, $SiMe(SiMe_3)$, $CH_2$, $(CH_2)_2$, $(CH_2)_3$ and $C(CH_3)_2$;
$R^1$, $R^2$, $R^3$ and $R^4$ equal to or different from each other, are hydrogen atoms or linear or branched, saturated or unsaturated $C_1$-$C_{20}$-alkyl, $C_3$-$C_{20}$-cycloalkyl, $C_6$-$C_{20}$-aryl, $C_7$-$C_{40}$-alkylaryl, or $C_7$-$C_{40}$-arylalkyl radicals, optionally containing one or more heteroatoms belonging to groups 13-17 of the Periodic Table of the Elements; preferably $R^1$ and $R^2$, equal to or different from each other, are methyl, ethyl or isopropyl radicals;
preferably $R^3$ and $R^4$ are hydrogen atoms;
T, equal to or different from each other, is a moiety of formula (IIa) or (IIb):

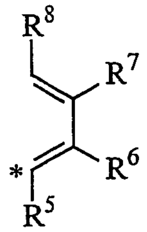

(IIa)

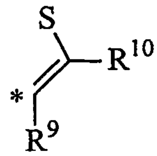

(IIb)

wherein:

the atom marked with the symbol * bonds the atom marked with the same symbol in the compound of formula (I);
$R^5$, $R^6$, $R^7$, $R^8$, $R^9$ and $R^{10}$ equal to or different from each other, are hydrogen atoms or linear or branched, saturated or unsaturated $C_1$-$C_{40}$-alkyl, $C_3$-$C_{40}$-cycloalkyl, $C_6$-$C_{40}$-aryl, $C_7$-$C_{40}$-alkylaryl, or $C_7$-$C_{40}$-arylalkyl radicals, optionally containing one or more heteroatoms belonging to groups 13-17 of the Periodic Table of the Elements; or two or more $R^3$, $R^4$, $R^5$, $R^6$ and $R^7$ can join to form a 4-7 saturated or unsaturated membered

rings, said ring can bear $C_1$-$C_{20}$ alkyl substituents.

Preferably $R^6$ and $R^8$ are hydrogen atoms; $R^7$ is hydrogen atom or a $C_1$-$C_{20}$-alkyl radical.
Preferably $R^{10}$ is a linear or branched $C_1$-$C_{20}$-alkyl radical.
Preferably $R^5$ and $R^9$ are moieties of formula (III):

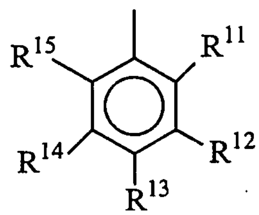

(IIIa)

wherein

$R^{11}$, $R^{12}$, $R^{13}$, $R^{14}$ and $R^{15}$, equal to or different from each other, are hydrogen atoms or linear or branched, saturated or unsaturated $C_1$-$C_{20}$-akyl, $C_3$-$C_{20}$-cycloalkyl, $C_6$-$C_{20}$-aryl, $C_7$-$C_{20}$-alkylaryl, or $C_7$-$C_{20}$-arylalkyl radicals, optionally containing one or more heteroatoms belonging to groups 13-17 of the Periodic Table of the Elements; or two or more $R^{11}$, $R^{12}$, $R^{13}$, $R^{14}$ and $R^{15}$ can join to form a 4-7 saturated or unsaturated membered rings, said ring can bear $C_1$-$C_{10}$ alkyl substituents; preferably at least one groups among $R^{11}$, $R^{12}$, $R^{13}$, $R^{14}$ and $R^{15}$ is a linear or branched, saturated or unsaturated $C_1$-$C_{20}$-alkyl radical; such as methyl, ethyl, tertbutyl; more preferably $R^{13}$ is a linear or branched, saturated or unsaturated $C_1$-$C_{20}$-alkyl radical.

The compound of formula (I) is preferably in the form of the racemic or racemic-like isomer. "Racemic-like" means that the benzo or thiophene moieties of the two $\pi$-ligands on the metallocene compound of formula (I) are on the opposite sides with respect to the plane containing the zirconium and the centre of the cyclopentadienyl moieties as shown in the following compound.

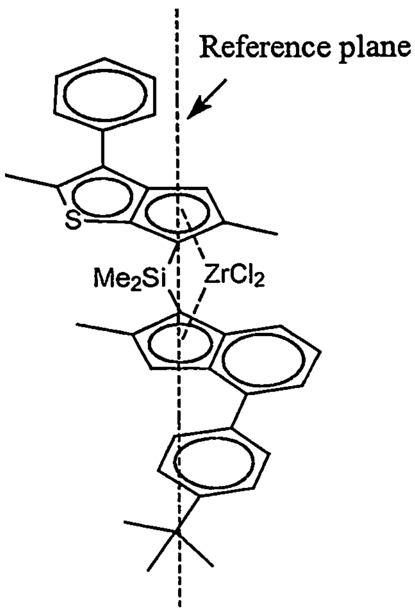


In one embodiment, in the compound of formula (I), T are the same and they have formula (IIa).
In a further embodiment, in the compound of formula (I) T are the same and they have formula (IIb).
In a further embodiment, in the compound of formula (I) T are different and they have formulas (IIb) and (IIa).
Compounds of formula (I) are known in the art, for example they can be prepared according to according to

USP 5,145,819, USP 5,786,432, USP 5,830,821, EP-A-0 485 823, WO 98/22486, WO 01/44318, WO 98/40331, WO 01/48034, PCT/EP02/13552 and DE 10324541.3.

The catalyst system used in the process of the present invention is supported on an inert carrier. This is achieved by depositing the metallocene compound i) or the product of the reaction thereof with the component ii), or the component ii) and then the metallocene compound i) on an inert support. Examples of inert carriers are inorganic oxides such as, for example, silica, alumina, Al-Si, Al-Mg mixed oxides, magnesium halides, organic polymeric supports such as styrene/divinylbenzene copolymers, polyethylene or polypropylene. The supportation process is carried out in an inert solvent, such as hydrocarbon selected from toluene, hexane, pentane and propane and at a temperature ranging from 0°C to 100°C, more preferably from 30°C to 60°C.

Preferred supports are porous organic polymers such as styrene/divinylbenzene copolymers, polyamides, or polyolefins.

Preferably porous alpha-olefin polymers are polyethylene, polypropylene, polybutene, copolymers of propylene and copolymers of ethylene.

Two particularly suitable classes of porous propylene polymers are those obtained according to WO 01/46272 and W0 02/051887 particularly good results are obtained when the catalyst described WO 01/46272 is used with the process described in W0 02/051887.

Polymers obtained according to WO 01/46272 have a high content of the so-called stereoblocks, i.e. of polymer fractions which, although predominantly isotactic, contain a not negligible amount of non-isotactic sequences of propylene units. In the conventional fractionation techniques such as the TREF (Temperature Rising Elution Temperature) those fractions are eluted at temperatures lower than those necessary for the more isotactic fractions. The polymers obtained according to the process described in W0 02/051887 show improved porosity.

The porous organic polymer has preferably porosity due to pores with diameter up 10 μm (100000 Å) measured to the method reported below, higher than 0.1 cc/g preferably comprised between 0.2 cc/g to 2 cc/g; more preferably from 0.3 cc/g to 1 cc/g.

In the porous organic polymer fit as support according to the process of the present invention, the total porosity due to all pores whose diameter is comprised between 0.1 μm (1000 Å) and 2 μm (20000 Å) is at least 30% of the total porosity due to all pores whose diameter is comprised between 0.02 μm (200 A) and 10 μm (100000 Å). Preferably the total porosity due to all pores whose diameter is comprised between 0.1 μm (1000 Å) and 2 μm (20000 Å) is at least 40% of the total porosity due to all pores whose diameter is comprised between 0.02 μm (200 Å) and 10 μm (100000 Å). More preferably the total porosity due all pores whose diameter is comprised between 0.1 μm (1000 Å) and 2 μm (20000 Å) is at least 50% of the total porosity due all pores whose diameter is comprised between 0.02 μm (200 Å) and 10 μm (100000 Å).

A particularly suitable process for supporting the catalyst system is described in WO 01/44319, wherein the process comprises the steps of:

(a) preparing a catalyst solution comprising a catalyst system;
(b) introducing into a contacting vessel:

    (i) a porous support material in particle form, and
    (ii) a volume of the catalyst solution not greater than the total pore volume of the porous support material introduced;

(c) discharging the material resulting from step (b) from the contacting vessel and suspending it in an inert gas flow, under such conditions that the solvent evaporates; and
reintroducing at least part of the material resulting from step (c) into the contacting vessel together with another volume of the catalyst solution not greater than the total pore volume of the reintroduced material.

Alumoxanes used as component ii) can be obtained by reacting water with an organoaluminium compound of formula $H_jAlU_{3-j}$ or $H_jAl_2U_{6-j}$, where U substituents, same or different, are hydrogen atoms, halogen atoms, $C_1$-$C_{20}$-alkyl, $C_3$-$C_{20}$-cyclalkyl, $C_6$-$C_{20}$-aryl, $C_7$-$C_{20}$-alkylaryl or or C7-C20-arylalkyl radical, optionally containing silicon or germanium atoms with the proviso that at least one U is different from halogen, and j ranges from 0 to 1, being also a non-integer number. In this reaction the molar ratio of Al/water is preferably comprised between 1:1 and 100:1. The molar ratio between aluminium and the metal of the metallocene generally is comprised between about 10:1 and about 20000:1, and more preferably between about 100:1 and about 5000:1.

The alumoxanes used in the catalyst according to the invention are considered to be linear, branched or cyclic compounds containing at least one group of the type:

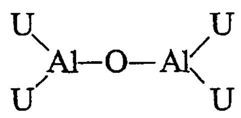

wherein the substituents U, same or different, are defined above.

In particular, alumoxanes of the formula:

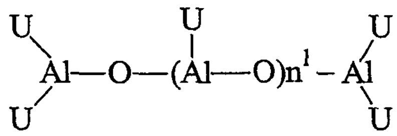

can be used in the case of linear compounds, wherein $n^1$ is 0 or an integer of from 1 to 40 and the substituents U are defined as above; or alumoxanes of the formula:

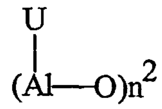

can be used in the case of cyclic compounds, wherein $n^2$ is an integer from 2 to 40 and the U substituents are defined as above.

Examples of alumoxanes suitable for use according to the present invention are methylalumoxane (MAO), tetra-(isobutyl)alumoxane (TIBAO), tetra-(2,4,4-trimethyl-pentyl)alumoxane (TIOAO), tetra-(2,3-dimethylbutyl)alumoxane (TDMBAO) and tetra-(2,3,3-trimethylbutyl)alumoxane (TTMBAO).

Particularly interesting cocatalysts are those described in WO 99/21899 and in WO01/21674 in which the alkyl and aryl groups have specific branched patterns.

Non-limiting examples of aluminium compounds that can be reacted with water to give suitable alumoxanes described in WO 99/21899 and WO01/21674, are: tris(2,3,3-trimethyl-butyl)aluminium, tris(2,3-dimethyl-hexyl)aluminium, tris(2,3-dimethyl-butyl)aluminium, tris(2,3-dimethyl-pentyl)aluminium, tris(2,3-dimethyl-heptyl)aluminium, tris(2-methyl-3-ethyl-pentyl)aluminium, tris(2-methyl-3-ethyl-hexyl)aluminium, tris(2-methyl-3-ethyl-heptyl)aluminium, tris(2-methyl-3-propyl-hexyl)aluminium, tris(2-ethyl-3-methyl-butyl)aluminium, tris(2-ethyl-3-methyl-pentyl)aluminium, tris(2,3-diethyl-pentyl)aluminium, tris(2-propyl-3-methyl-butyl)aluminium, tris(2-isopropyl-3-methylbutyl)aluminium, tris(2-isobutyl-3-methyl-pentyl)aluminium, tris(2,3,3-trimethylpentyl)aluminium, tris(2,3,3-trimethyl-hexyl)aluminium, tris(2-ethyl-3,3-dimethylbutyl)aluminium, tris(2-ethyl-3,3-dimethyl-pentyl)aluminium, tris(2-isopropyl-3,3-dimethyl-butyl)aluminium, tris(2-trimethylsilyl-propyl)aluminium, tris(2-methyl-3-phenyl-butyl)aluminium, tris(2-ethyl-3-phenyl-butyl)aluminium, tris (2,3-dimethyl-3-phenyl-butyl)aluminium, tris(2-phenyl-propyl)aluminium, tris[2-(4-fluorophenyl)-propyl]aluminium, tris [2-(4-chloro-phenyl)-propyl]aluminium, tris[2-(3-isopropyl-phenyl)-propyl]aluminium, tris(2-phenyl-butyl)aluminium, tris (3-methyl-2-phenyl-butyl)aluminium, tris(2-phenyl-pentyl)aluminium, tris[2-(pentafluorophenyl)-propyl]aluminium, tris [2,2-diphenyl-ethyl]aluminium and tris[2-phenyl-2-methyl-propyl]aluminium, as well as the corresponding compounds wherein one of the hydrocarbyl groups is replaced with a hydrogen atom, and those wherein one or two of the hydrocarbyl groups are replaced with an isobutyl group.

Amongst the above aluminium compounds, trimethylaluminium (TMA), triisobutylaluminium (TIBA), tris(2,4,4-trimethyl-pentyl)aluminium (TIOA), tris(2,3-dimethylbutyl)aluminium (TDMBA) and tris(2,3,3-trimethylbutyl)aluminium (TTMBA) are preferred.

Non-limiting examples of compounds able to form an alkylmetallocene cation are compounds of formula $D^+E^-$, wherein $D^+$ is a Brønsted acid, able to donate a proton and to react irreversibly with a substituent X of the metallocene of formula (I) and $E^-$ is a compatible anion, which is able to stabilize the active catalytic species originating from the reaction of the two compounds, and which is sufficiently labile to be removed by an olefinic monomer. Preferably, the anion $E^-$ comprises one or more boron atoms. More preferably, the anion $E^-$ is an anion of the formula $B\ Ar_4^{(-)}$, wherein the substituents Ar which can be identical or different are aryl radicals such as phenyl, pentafluorophenyl or bis(trifluoromethyl)phenyl. Tetrakis-pentafluorophenyl borate is particularly preferred compound, as described in WO 91/02012. Moreover, compounds of formula $BAr_3$ can be conveniently used.

Compounds of this type are described, for example, in the International patent application WO 92/00333. Other

examples of compounds able to form an alkylmetallocene cation are compounds of formula $BAr_3P$ wherein P is a substituted or unsubstituted pyrrol radical. These compounds are described in WO01/62764. Compounds containing boron atoms can be conveniently supported according to the description of DE-A-19962814 and DE-A-19962910. All these compounds containing boron atoms can be used in a molar ratio between boron and the metal of the metallocene comprised between about 1:1 and about 10:1; preferably 1:1 and 2.1; more preferably about 1:1.

Non limiting examples of compounds of formula $D^+E^-$ are: Triethylammoniumtetra(phenyl)borate, Tributylammoniumtetra(phenyl)borate, Trimethylammoniumtetra(tolyl)borate, Tributylammoniumtetra(tolyl)borate, Tributylammoniumtetra(pentafluorophenyl)borate, Tributylammoniumtetra(pentafluorophenyl)aluminate, Tripropylammoniumtetra (dimethylphenyl)borate, Tributylammoniumtetra(trifluoromethylphenyl)borate, Tributylammoniumtetra(4-fluorophenyl) borate, N,N-Dimethylbenzylammonium-tetrakispentafluorophenylborate, N,N-Dimethylhexylamonium-tetrakispentafluorophenylborate, N,N-Dimethylaniliniumtetra(phenyl)borate, N,N-Diethylaniliniumtetra(phenyl)borate, N,N-Dimethylaniliniumtetrakis(pentafluorophenyl)borate, N,N-Dimethylaniliniumtetrakis(pentafluorophenyl)aluminate, N,N-Dimethylbenzylammonium-tetrakispentafluorophenylborate, N,N-Dimethylhexylamonium-tetrakispentafluorophenylborate, Di (propyl)ammoniumtetrakis(pentafluorophenyl)borate, Di(cyclohexyl)ammoniumtetrakis(pentafluorophenyl)borate, Triphenylphosphoniumtetrakis(phenyl)borate, Triethylphosphoniumtetrakis(phenyl)borate, Diphenylphosphoniumtetrakis(phenyl)borate, Tri(methylphenyl)phosphoniumtetrakis(phenyl)borate, Tri(dimethylphenyl)phosphoniumtetrakis (phenyl)borate, Triphenylcarbeniumtetrakis(pentafluorophenyl)borate, Triphenylcarbeniumtetrakis(pentafluorophenyl) aluminate, Triphenylcarbeniumtetrakis(phenyl)aluminate, Ferroceniumtetrakis(pentafluorophenyl)borate, Ferroceniumtetrakis(pentafluorophenyl)aluminate. Triphenylcarbeniumtetrakis(pentafluorophenyl)borate, and N,N-Dimethylaniliniumtetrakis(pentafluorophenyl)borate.

Organic aluminum compounds used as compound iii) are those of formula $H_jAlU_{3-j}$ or $H_jAl_2U_{6-j}$ as described above.

Preferably step a) further comprises a prepolymerization step a-1).

The prepolymerization step a-1) can be carried out by contacting the catalyst system with ethylene propylene or one ore more alpha olefins of formula $CH_2$=$CHT^1$, wherein $T^1$ is a $C_2$-$C_{20}$ alkyl radical. Preferably said alpha olefins are propylene or ethylene, at a temperature ranging from -20°C to 70°C, in order to obtain a prepolymerized catalyst system preferably containing from 5 to 500 g of polymer per gram of catalyst system.

Thus preferably step a) comprises

a-1) contacting the catalyst system described above with ethylene and/or propylene and/or one ore more alpha olefins of formula $CH_2$=$CHT^1$, wherein $T^1$ is a $C_2$-$C_{20}$ alkyl radical; preferably propylene or ethylene. in order to obtain a prepolymerized catalyst system preferably containing from 5 to 500 g of polymer per gram of catalyst system;
a-2) polymerizing propylene and optionally one or more monomers selected from ethylene and alpha olefins of formula $CH_2$=$CHT^1$, wherein $T^1$ is a $C_2$-$C_{20}$ alkyl radical in the presence of the prepolymerized catalyst system obtained in step a-1).

Step a) of the present invention can be carried out in liquid phase, in which the polymerization medium can be an inert hydrocarbon solvent or the polymerization medium can be liquid propylene optionally in the presence of an inert hydrocarbon solvent, and of ethylene or one or more comonomer of formula $CH_2$=$CHT^1$, or step a) can be carried out in a gas phase. Said hydrocarbon solvent can be either aromatic (such as toluene) or aliphatic (such as propane, hexane, heptane, isobutane, cyclohexane and 2,2,4-trimethylpentane).

Preferably the polymerization medium is liquid propylene. It can optionally contains minor amounts (up to 20% by weight, preferably up to 10% by weight, more preferably up to 5% by weight) of an inert hydrocarbon solvent or of one or more comonomer such as ethylene or alpha-olefins of formula $CH_2$=$CHT^1$.

Step a) can be carried out in the presence of hydrogen. The amount of hydrogen present during the polymerization reaction is higher than 1 ppm with respect to the weight of propylene present in the reactor; more preferably from 5 to 2000 ppm; even more preferably from 6 to 500 ppm. Hydrogen can be added either at the beginning of the polymerization reaction or it can also be added at a later stage after a prepolymerization step has been carried out.

The propylene polymer obtained in step a) is a propylene homopolymer or a propylene copolymer containing up to 20% by mol preferably from 0.1 to 10% by mol, more preferably from 1% to 5% by mol of derived units of ethylene or one or more alpha olefins of formula $CH_2$=$CHT^1$. Non-limiting examples of alpha olefins of formula $CH_2$=$CHT^1$ which can be used in the process of the invention are 1-butene, 1-pentene, 4-methyl-1-pentene, 1-hexene, 1-octene, 4,6-dimethyl-1-heptene, 1-decene, 1-dodecene, 1-tetradecene, 1-hexadecene, 1-octadecene and 1-eicosene. Preferred comonomers are ethylene or 1-butene.

The amount of polymer obtained in step a) ranges from 5% to 90% by weight of the total polymer produced in the whole process, preferably it ranges from 30% to 70% by weight of the total polymer produced in the whole process; more preferably from 30% to 50% by weight of the total polymer produced in the whole process.

Preferably in step a) propylene homopolymer is prepared.

Step b) is carried out in a gas phase, preferably in a fluidized bed reactor or in a continuos stirrer tank reactor. The polymerization temperature is generally comprised between -100°C and +200°C, and, suitably, between 10°C and +100°C. The polymerization pressure is generally comprised between 0,5 and 100 bar. The amount of polymer obtained in step b) ranges from 10% to 95% by weight of the polymer produced in the whole process, preferably it ranges from 30% to 70% by weight of the polymer produced in the whole process, more preferably it ranges from 50% to 70% by weight of the polymer produced in the whole process.

In step b) an ethylene copolymer having from 4% by mol to 90% by mol, preferably from 5.5% by mol to 60% by mol of derived units of comonomers of formula $CH_2=CHT^1$ and optionally up to 20% of derived units of non conjugated diene, is produced. Examples of comonomer of formula $CH_2=CHT^1$ that can be used in step b) of the present invention are: 1-butene, 1-pentene, 4-methyl-1-pentene, 1-hexene, 1-octene, 4,6-dimethyl-1-heptene, 1-decene, 1-dodecene, 1-tetradecene, 1-hexadecene, 1-octadecene and 1-eicosene. Preferred comonomer is 1-butene.

The polymer obtained in step b) can optionally contains up to 20% by mol of a non conjugated diene. Non conjugated dienes can be a straight chain, branched chain or cyclic hydrocarbon diene having from 6 to 20 carbon atoms. Examples of suitable non-conjugated dienes are:

- straight chain acyclic dienes, such as 1,4-hexadiene and 1,6-octadiene;
- branched chain acyclic dienes, such as 5-methyl-1,4-hexadiene, 3,7-dimethyl-1,6-octadiene, 3,7-dimethyl-1,7-octadiene and mixed isomers of dihydro myricene and dihydroocinene;
- single ring alicyclic dienes, such as 1,3-cyclopentadiene, 1,4-cyclohexadiene, 1,5-cyclooctadiene and 1,5-cyclododecadiene;
- multi-ring alicyclic fused and bridged ring dienes, such as tetrahydroindene, methyl tetrahydroindene, dicyclopentadiene, bicyclo-(2,2,1)-hepta-2, 5-diene; and
- alkenyl, alkylidene, cycloalkenyl and cycloalkylidene norbornenes, such as 5-methylene-2-norbomene (MNB), 5-propenyl-2-norbornene, 5-isopropylidene-2-norbomene,5-(4-cyclopentenyl)-2-norbomene, 5-cyclohexylidene-2-norbornene, 5-vinyl-2-norbornene and norbomadiene.

Preferred dienes are 1,4-hexadiene (HD), 5-ethylidene-2-norbornene (ENB), 5-vinylidene-2-norbornene (VNB), 5-methylene-2-norbomene (MNB) and dicyclopentadiene (DCPD). Particularly preferred dienes are 5-ethylidene-2-norbornene (ENB) and 1,4-hexadiene (HD).

When present the non-conjugated dienes are generally incorporated into the polymer in an amount from 0.1% to about 20% by mol; preferably from 1% to 15% by mol, and more preferably from 2% to 7% by mol. If desired, more than one diene may be incorporated simultaneously, for example HD and ENB, with total diene incorporation within the limits specified above.

The process of the present invention can be carried out in one reactor or in two or more reactor in series.

The following examples are given to illustrate and not to limit the invention.

**Examples**

**General characterization**

Determination of X.S.

2.5g of polymer were dissolved in 250 ml of o-xylene under stirring at 135°C for 30 minutes, then the solution was cooled to 25°C and after 30 minutes the insoluble polymer was filtered. The resulting solution was evaporated in nitrogen flow and the residue was dried and weighed to determine the percentage of soluble polymer (X.S.) and then, by difference, the insolubles (X.I.).

NMR

The proton and carbon spectra of polymers were obtained using a Bruker DPX 400 spectrometer operating in the Fourier transform mode at 120°C at 400.13 MHz and 100.61 MHz respectively. The samples were dissolved in $C_2D_2Cl_4$. As reference the residual peak of $C_2DHCl_4$ in the $^1H$ spectra (5.95 ppm) and the peak of the *mmmm* pentad in the $^{13}C$ spectra (21.8 ppm) were used. Proton spectra were acquired with a 45° pulse and 5 seconds of delay between pulses; 256 transients were stored for each spectrum. The carbon spectra were acquired with a 90° pulse and 12 seconds (15 seconds for ethylene based polymers) of delay between pulses and CPD (waltz 16) to remove $^1H$-$^{13}C$ couplings. About 3000 transients were stored for each spectrum.

The intrinsic viscosity (I.V.) was measured in tetrahydronaphtalene (THN) at 135°C.

Porosity (mercury) is determined by immersing a known quantity of the sample in a known quantity of mercury

inside a dilatometer and gradually hydraulically increasing the pressure of the mercury. The pressure of introduction of the mercury in the pores is in function of the diameter of the same. The measurement was carried out using a porosimeter "Porosimeter 2000 Series" (Carlo Erba). The total porosity was calculated from the volume decrease of the mercury and the values of the pressure applied.

The porosity expressed as percentage of voids (%$V/V_1$) is determined by absorption of mercury under pressure. The volume of mercury absorbed corresponds to the volume of the pores. For this determination, a calibrated dilatometer (diameter 3 mm) CD3 (Carlo Erba) connected to a reservoir of mercury and to a high-vacuum pump ($1x10^{-2}$ mbar) is used. A weighed amount of sample (about 0,5 g) is placed in the dilatometer. The apparatus is then placed under high vacuum (<0,1 mm Hg) and is maintained in these conditions for 10 minutes. The dilatometer is then connected to the mercury reservoir and the mercury is allowed to flow slowly into it until it reaches the level marked on the dilatometer at a height of 10 cm. The valve that connects the dilatometer to the vacuum pump is closed and the apparatus is pressurized with nitrogen (2,5 $Kg/cm^2$). Under the effect of the pressure, the mercury penetrates into the pores and the level goes down according to the porosity of the material. Once the level at which the mercury has stabilized has been measured on the dilatometer, the volume of the pores is calculated from the equation $V = R2\pi\Delta H$, where R is the radius of the dilatometer and $\Delta H$ is the difference in cm between the initial and the final levels of the mercury in the dilatometer. By weighting the dilatometer, dilatometer+mercury, dilatometer+mercury+sample, the value of the apparent volume $V_1$ of the sample prior to penetration of the pores can be calculated. The volume of the sample is given by:

$$V_1 = [P_1-(P_2-P)]/D$$

P is the weight of the sample in grams, $P_1$ is the weight of the dilameter+mercury in grams, $P_2$ is the weight of the dilatometer+mercury+sample in grams, D is the density of mercury (at 25°C =13,546 g/cc). The percentage porosity is given by the relation:

$$X = (100V)/V_1.$$

The pore distribution curve, and the average pore size are directly calculated from the integral pore distribution curve which is function of the volume reduction of the mercury and applied pressure values (all these data are provided and elaborated by the porosimeter associated computer which is equipped with a "MILESTONE 200/2.04" program by C. Erba.

Bulk density (PBD) was measured according to DIN-53194.

Haze was measured according to ASTM D10003-61

**Metallocene compound**

*rac*-dimethylsilylbis(2-methyl-4-(*para*-tert-butylphenyl)-indenyl)-zirconium dichloride (rac-$Me_2Si$(2-Me-4 (4*t*BuPh)$Ind)_2ZrCl_2$) (A-1) was prepared according to WO 98/40331 (example 65).

**Organic porous support**

Polyethylene prepolymer (support A) was produced according to the procedure described in example 1 of WO 95/26369, under the following conditions: polymerisation temperature 0°C, $AliBu_3$ ($AliBu_3$/ZN catalyst = 1 (w/w)), 1.5 bar-g of ethylene (conversion of 40 $g_{PE}/g_{cat}$). The support has a PBD of 0.285 g/ml, porosity 0.507 cc/g, and % of pores having diameter comprised between 0.1 μm (1000 Å) and 2 μm (20000 Å) of 76.19%.

**Preparation of the catalyst system**

Catalyst A

4.6g of support A described above ,were treated with $H_2O$ dispersed in hexane in order to deactivate the $MgCl_2$/Ti-based catalyst, then dried in a flow of nitrogen. The support is contacted with 0.5mL of MAO solution (30%w in toluene) diluted with 1.5 ml of toluene to scavenge impurities and residual water.

The catalytic complex was prepared by adding 42mg of metallocene (A-1) in 4.1ml of MAO solution (30% w/w in toluene).

The so obtained catalytic mixture is impregnated on support A (treated as described above) according to procedure described in WO 01/44319.

The obtained supported catalytic system contains 8.0 %w of Aluminium and 0.072% of Zirconium measured via Ion Coupled Plasma.

**Polymerization examples 1-4**

**General polymerization process**

The polymerizations were done in stainless steel fluidized bed reactors.

During the polymerization, the gas phase in each reactor was continuously analyzed by gaschromatography in order to determine the content of ethylene, propylene and hydrogen.

Ethylene, propylene, 1-butene and hydrogen were fed in such a way that during the course of the polymerization their concentration in gas phase remained constant, using instruments that measure and/or regulate the flow of the monomers.

The operation was continuous in two stages, each one comprising the polymerization of the monomers in gas phase.

Propylene was prepolymerized in liquid propane in a 75 litres stainless steel loop reactor with an internal temperature of 35°C in the presence of a catalyst system prepared as described above (amounts of catalyst feed are reported in table 1).

**1st stage -** The thus obtained prepolymer was discharged into the first gas phase reactor, having a temperature of 75°C and a pressure of 24 bar. Triethylaluminum was fed as scavenger. Thereafter, hydrogen and propylene and an inert gas were fed in the ratio and quantities reported in Table 1, the residence times are reported in Table 1.

**2nd stage -** After removing a sample to carry out the various analyses, the polymer was purged to remove propylene and was discharged into the second phase reactor having a temperature of 65°C and a pressure indicated in table 1. Thereafter, hydrogen, ethylene, 1-butene and an inert gas were fed in the ratio and quantities reported in Table 1, to obtain the composition of the gas phase reported in Table 1. Residence times are indicated in Table 1

**Table 1**

| | **Ex.1** | **Ex. 2** | **Ex.3*** | **Ex. 4#** |
|---|---|---|---|---|
| **prepolymerization** | cat A | cat A | cat A | cat A |
| catalyst fed (g/h) | 22.0 | 30 | 25 | 26.7 |
| propane fed (mol) | 27 | 27 | 27 | 27 |
| propane/propylene weight ratio | 4.4 | 4.4 | 4.4 | 4.4 |
| residence time (min) | 16 | 16 | 16 | 16 |
| **1st stage (gas phase)** | | | | |
| Split (%wt.) | 62 | 70 | 28 | 63 |
| trialkylaluminum fed (g/h) | 20.0 | 20.0 | 15 | 20 |
| $H_2$/propylene ppm | 6 | 8 | 6 | 6 |
| Propylene in gas phase (%mol) | 19 | 19 | 30 | 20 |
| Bulk poured density g(/cc) | 0.429 | 0.420 | 0.460 | 0.431 |
| residence time (min) | 93 | 62 | 64.5 | 89 |
| Sol. Xyl. (%wt) | 0.23 | 0.30 | 0.50 | 0.26 |
| **2nd stage (gas phase)** | | | | |
| Split (%wt) | 38 | 30 | 66.5 | 37 |
| $H_2$/ethylene ppm | 137 | 84 | 130 | 0 |
| 1-butene/(ethylene + 1-butene) | 0.023 | 0.029 | 0.023 | 0.024 |
| residence time (min) | 170 | 69 | 174 | 172 |
| 1-butene in the copolymer (wt%) | 9.5 | 11.8 | 12.9 | 9.8 |

(continued)

| | Ex.1 | Ex. 2 | Ex.3* | Ex. 4# |
|---|---|---|---|---|
| **polymer analysis** | | | | |
| production Kg/g | 5.0 | 3.5 | 5.0 | 4.6 |
| Ethylene tot. (%wt) | 34.2 | 26.2 | 58.8 | 34.5 |
| 1-butene tot (wt%) | 3.6 | 3.5 | 8.6 | 3.7 |
| haze 1 mm thick plaque % (ASTM D 1003) | 18.2 | 20.1 | 43.3 | 50.3 |
| * temperature in the second stage was 75°C<br># comparative | | | | |

By comparing examples 1 and comparative examples 4 it clearly results that by adding hydrogen in the second stage of the polymerization process according to the present invention polymer having a lower value of haze is obtained.

## Claims

**1.** A multistage process comprising the following steps:

a) polymerizing propylene with optionally one or more monomers selected from ethylene and alpha olefins of formula $CH_2$=$CHT^1$, wherein $T^1$ is a $C_2$-$C_{20}$ alkyl radical in the presence of a catalysts system, supported on an inert carrier comprising:

i) a transition metal compound containing a ligand having a cyclopentadienyl skeleton; and
ii) an alumoxane or a compound capable of forming an alkyl metallocene cation;

b) contacting, under polymerization conditions, in a gas phase, ethylene with one or more alpha olefins of formula $CH_2$=$CHT^1$, wherein $T^1$ is a $C_2$-$C_{20}$ alkyl radical, and optionally a non-conjugated diene, in the presence of the polymer obtained in step a), and in the presence of hydrogen, the weight ratio hydrogen/ethylene being higher than 1 ppm;

wherein the amount of the polymer obtained in step a) ranges from 5% by weight and 90% by weight of the polymer obtained in the whole process and the amount of polymer obtained in step b) ranges from 10% by weight and 95% by weight of the polymer obtained in the whole process.

**2.** The process according to claim 1 wherein step b) is carried out in the presence of an additional organo aluminum compound.

**3.** The process according to claims 1-2 wherein the catalyst system further comprises

iii) an organo aluminum compound.

**4.** The process according to anyone of claims 1-3 wherein the weight ratio hydrogen/ethylene present during the polymerization reaction in step b) ranges from 5 to 2000 ppm.

**5.** The process according to anyone of claims 1-4 wherein the transition metal compounds containing a ligand having a cyclopentadienyl skeleton have formula (I):

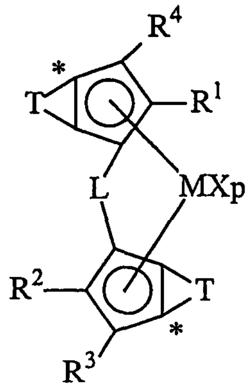

(I)

wherein:

M is an atom of a transition metal selected from those belonging to group 3, 4, 5, 6 or to the lanthanide or actinide groups in the Periodic Table of the Elements;
p is an integer from 0 to 3, being equal to the formal oxidation state of the metal M minus 2;
X, same or different, is a hydrogen atom, a halogen atom, or a R, OR, $OSO_2CF_3$, OCOR, SR, $NR_2$ or $PR_2$ group, wherein R is a linear or branched, saturated or unsaturated $C_1$-$C_{20}$ alkyl, $C_3$-$C_{20}$ cycloalkyl, $C_6$-$C_{20}$ aryl, $C_7$-$C_{20}$ alkylaryl or $C_7$-$C_{20}$ arylalkyl radical, optionally containing heteroatoms belonging to groups 13-17 of the Periodic Table of the Elements; or two X can optionally form a substituted or unsubstituted butadienyl radical or a OR'O group wherein R' is a divalent radical selected from $C_1$-$C_{20}$ alkylidene, $C_6$-$C_{40}$ arylidene, $C_7$-$C_{40}$ alkylarylidene and $C_7$-$C_{40}$ arylalkylidene radicals;
L is a divalent bridging group selected from $C_1$-$C_{20}$ alkylidene, $C_3$-$C_{20}$ cycloalkylidene, $C_6$-$C_{20}$ arylidene, $C_7$-$C_{20}$ alkylarylidene, or $C_7$-$C_{20}$ arylalkylidene radicals optionally containing heteroatoms belonging to groups 13-17 of the Periodic Table of the Elements, and silylidene radical containing up to 5 silicon atoms;
$R^1$, $R^2$, $R^3$ and $R^4$ equal to or different from each other, are hydrogen atoms or linear or branched, saturated or unsaturated $C_1$-$C_{20}$-akyl, $C_3$-$C_{20}$-cycloalkyl, $C_6$-$C_{20}$-aryl, $C_7$-$C_{40}$-alkylaryl, or $C_7$-$C_{40}$-arylalkyl radicals, optionally containing one or more heteroatoms belonging to groups 13-17 of the Periodic Table of the Elements;
T, equal to or different from each other, is a moiety of formula (IIa) or (IIb):

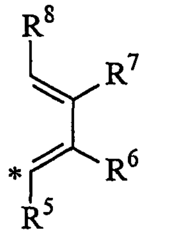

(IIa)

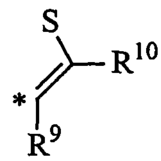

(IIb)

wherein:

the atom marked with the symbol * bonds the atom marked with the same symbol in the compound of formula (I);
$R^5$, $R^6$, $R^7$, $R^8$, $R^9$ and $R^{10}$ equal to or different from each other, are hydrogen atoms or linear or branched, saturated or unsaturated $C_1$-$C_{40}$-alkyl, $C_3$-$C_{40}$-cycloalkyl, $C_6$-$C_{40}$-aryl, $C_7$-$C_{40}$-alkylaryl, or $C_7$-$C_{40}$-arylalkyl radicals, optionally containing one or more heteroatoms belonging to groups 13-17 of the Periodic Table of the Elements; or two or more $R^3$, $R^4$, $R^5$, $R^6$ and $R^7$ can join to form a 4-7 saturated or unsaturated membered rings, said ring can bear $C_1$-$C_{20}$ alkyl substituents.

6. The process according to claim 5 wherein in the compound of formula (I) M is titanium, zirconium or hafnium; p is 2; X is a hydrogen atom, a halogen atom or a R group, wherein R is defined as in claim 1; L is selected from the group consisting of is $Si(CH_3)_2$, $SiPh_2$, SiPhMe, $SiMe(SiMe_3)$, $CH_2$, $(CH_2)_2$, $(CH_2)_3$ and $C(CH_3)_2$; $R^1$ and $R^2$, equal to or different from each other, are methyl, ethyl or isopropyl radicals; and $R^3$ and $R^4$ are hydrogen atoms.

7. The process according to claims 5 or 6 wherein in the compound of formula (I) $R^6$ and $R^8$ are hydrogen atoms; $R^7$ is hydrogen atom or a $C_1$-$C_{20}$-alkyl radical; and $R^{10}$ is a linear or branched $C_1$-$C_{20}$-alkyl radical.

8. The process according to anyone of claims 5-7 wherein in the compound of formula (I) $R^5$ and $R^9$ are moieties of formula (III):

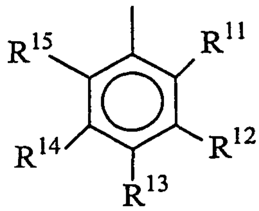

(IIIa)

wherein
$R^{11}$, $R^{12}$, $R^{13}$ , $R^{14}$ and $R^{15}$, equal to or different from each other, are hydrogen atoms or linear or branched, saturated or unsaturated $C_1$-$C_{20}$-alkyl, $C_3$-$C_{20}$-cycloalkyl, $C_6$-$C_{20}$-aryl, $C_7$-$C_{20}$-alkylaryl, or $C_7$-$C_{20}$-arylalkyl radicals, optionally containing one or more heteroatoms belonging to groups 13-17 of the Periodic Table of the Elements; or two or more $R^{11}$, $R^{12}$, $R^{13}$, $R^{14}$ and $R^{15}$ can join to form a 4-7 saturated or unsaturated membered rings, said ring can bear $C_1$-$C_{10}$ alkyl substituents;

9. The process according to claim 8 wherein in the moiety of formula (III) at least one groups among $R^{11}$, $R^{12}$, $R^{13}$, $R^{14}$ and $R^{15}$ is a linear or branched, saturated or unsaturated $C_1$-$C_{20}$-alkyl radical.

10. The process according to anyone of claims 5-9 wherein in the compound of formula (I) T are the same and they have formula (IIa).

11. The process according to anyone of claims 5-9 wherein in the compound of formula (I) T are the same and they have formula (IIb).

12. The process according to anyone of claims 5-9 wherein in the compound of formula (I) T are different and they have formulas (IIb) and (IIa).

13. The process according to anyone of claims 1-12 wherein the catalyst system is supported on a porous organic polymer.

14. The process according to anyone of claims 1-13 wherein step a) further comprises a prepolymerization step a-1).

15. The process according to anyone of claims 1 to 14 wherein step a) is carried out in the presence of hydrogen.

16. The process according to anyone of claims 1 to 15 wherein in step a) from 30% to 70% by weight of a propylene homopolymer or propylene copolymer containing up to 20% by mol of derived units of ethylene or one or more alpha olefins of formula $CH_2$=$CHT^1$ is produced.

17. The process according to anyone of claims 1 to 16 wherein in step b) from 30% to 70% by weight of an ethylene copolymer having from 4% by mol to 60% by mol of derived units of comonomers of formula $CH_2$=$CHT^1$ and optionally up to 20% of derived units of non conjugated diene, is produced.

18. The process according to anyone of claims 1 to 17 wherein in step a) a propylene homopolymer is produced.

**19.** The process according to anyone of claims 1 to 18 wherein in step b) an ethylene 1-butene copolymer is produced.

**Patentansprüche**

**1.** Mehrstufenverfahren, umfassend die folgenden Schritte:

a) Polymerisieren von Propylen mit optional einem oder mehr Monomer(en), das/die aus Ethylen und $\alpha$-Olefinen der Formel $CH_2=CHT^1$ ausgewählt ist/sind, worin $T^1$ einen $C_2$-$C_{20}$-Alkylrest in der Anwesenheit eines Katalysatorsystems darstellt, das auf einem inerten Träger geträgert ist, umfassend:

i) eine Übergangsmetallverbindung, enthaltend einen Liganden mit einem Cyclopentadienylgerüst; und
ii) ein Alumoxan oder eine Verbindung, die zur Bildung eines Alkylmetallocenkations fähig ist;

b) in Kontakt bringen, unter Polymerisationsbedingungen, in einer Gasphase, von Ethylen mit einem oder mehr $\alpha$-Olefin(en) der Formel $CH_2=CHT^1$, worin $T^1$ einen $C_2$-$C_{20}$-Alkylrest darstellt, und optional einem nicht konjugierten Dien, in der Anwesenheit des in Schritt a) erhaltenen Polymers und in der Anwesenheit von Wasserstoff, wobei das Gewichtsverhältnis von Wasserstoff zu Ethylen höher als 1 ppm beträgt;
worin die Menge des in Schritt a) erhaltenen Polymers im Bereich von 5 Gew.-% bis 90 Gew.-% des im gesamten Verfahren erhaltenen Polymers liegt und die Menge des in Schritt b) erhaltenen Polymers im Bereich von 10 Gew.-% bis 95 Gew.-% des im gesamten Verfahren erhaltenen Polymers liegt.

**2.** Verfahren nach Anspruch 1, worin Schritt b) in der Anwesenheit einer zusätzlichen Organoaluminiumverbindung durchgeführt wird.

**3.** Verfahren nach den Ansprüchen 1-2, worin das Katalysatorsystem ferner Folgendes umfasst:

iii) eine Organoaluminiumverbindung.

**4.** Verfahren nach einem der Ansprüche 1-3, worin das während der Polymerisationsreaktion in Schritt b) anwesende Gewichtsverhältnis von Wasserstoff zu Ethylen im Bereich von 5 bis 2000 ppm liegt.

**5.** Verfahren nach einem der Ansprüche 1-4, worin die Übergangsmetallverbindungen, die einen Liganden mit einem Cyclopentadienylgerüst enthalten, die folgende Formel (I) aufweisen:

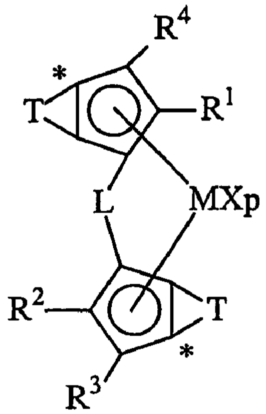

(I)

worin:

M ein Atom eines Übergangsmetalls darstellt, das aus denen ausgewählt ist, die zur Gruppe 3, 4, 5, 6 oder zu den Lanthanoid- oder Aktinoidgruppen im Periodensystem der Elemente gehören;
p eine ganze Zahl von 0 bis 3 darstellt, die der von dem formalen Oxidationszustand des Metalls M minus 2

entspricht;

X, gleich oder verschieden, ein Wasserstoffatom, ein Halogenatom oder eine R-, OR-, $OSO_2CF_3$-, OCOR-, SR-, $NR_2$- oder $PR_2$-Gruppe darstellt, worin R einen linearen oder verzweigten, gesättigten oder ungesättigten $C_1$-$C_{20}$-Alkyl-, $C_3$-$C_{20}$-Cycloalkyl-, $C_6$-$C_{20}$-Aryl-, $C_7$-$C_{20}$-Alkylaryl- oder $C_7$-$C_{20}$-Arylalkylrest darstellt, der optional Heteroatome enthält, die zu den Gruppen 13-17 des Periodensystems der Elemente gehören; oder zwei X optional einen substituierten oder nicht substituierten Butadienylrest oder eine OR'O-Gruppe bilden können, worin R' einen divalenten Rest darstellt, der aus $C_1$-$C_{20}$-Alkyliden-, $C_6$-$C_{40}$-Aryliden-, $C_7$-$C_{40}$-Alkylaryliden- und $C_7$-$C_{40}$-Arylalkylidenresten ausgewählt ist;

L eine divalente brückenbildende Gruppe darstellt, die aus $C_1$-$C_{20}$-Alkyliden-, $C_3$-$C_{20}$-Cycloalkyliden-, $C_6$-$C_{20}$-Aryliden-, $C_7$-$C_{20}$-Alkylaryliden- oder $C_7$-$C_{20}$-Arylalkylidenresten ausgewählt ist, die optional Heteroatome enthalten, die zu den Gruppen 13-17 des Periodensystems der Elemente gehören, und einem Silylidenrest, der bis zu 5 Siliziumatome enthält;

$R^1$, $R^2$, $R^3$ und $R^4$, gleich zueinander oder verschieden voneinander, Wasserstoffatome oder lineare oder verzweigte, gesättigte oder ungesättigte $C_1$-$C_{20}$-Alkyl-, $C_3$-$C_{20}$-Cycloalkyl-, $C_6$-$C_{20}$-Aryl-, $C_7$-$C_{40}$-Alkylaryl- oder $C_7$-$C_{40}$-Arylalkylreste darstellen, die optional ein oder mehr Heteroatom(e) enthalten, die zu den Gruppen 13-17 des Periodensystems der Elemente gehören;

die T, gleich zueinander oder verschieden voneinander, einen Teil der Formel (IIa) oder (IIb) wie folgt darstellen:

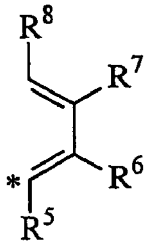

(IIa)

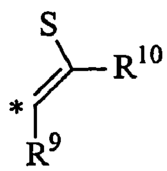

(IIb)

worin:

das mit dem Zeichen * markierte Atom das Atom bindet, das in der Verbindung der Formel (I) mit dem gleichen Zeichen markiert ist;

$R^5$, $R^6$, $R^7$, $R^8$, $R^9$ und $R^{10}$, gleich zueinander oder verschieden voneinander, Wasserstoffatome oder lineare oder verzweigte, gesättigte oder ungesättigte $C_1$-$C_{40}$-Alkyl-, $C_3$-$C_{40}$-Cycloalkyl-, $C_6$-$C_{40}$-Aryl-, $C_7$-$C_{40}$-Alkylaryl- oder $C_7$-$C_{40}$-Arylalkylreste darstellen, die optional ein oder mehr Heteroatom(e) enthalten, die zu den Gruppen 13-17 des Periodensystems der Elemente gehören; oder zwei oder mehr $R^3$, $R^4$, $R^5$, $R^6$ und $R^7$ sich zum Bilden eines 4- bis 7-gliedrigen gesättigten oder ungesättigten Rings verbinden können, wobei der Ring $C_1$-$C_{20}$-Alkylsubstituenten tragen kann.

6. Verfahren nach Anspruch 5, worin in der Verbindung der Formel (I) M für Titan, Zirkonium oder Hafnium steht; p für 2 steht; X ein Wasserstoffatom, ein Halogenatom oder eine R-Gruppe darstellt, worin R nach Anspruch 1 definiert ist; L aus der Gruppe ausgewählt ist, bestehend aus $Si(CH_3)_2$, $SiPh_2$, SiPhMe, $SiMe(SiMe_3)$, $CH_2$, $(CH_2)_2$, $(CH_2)_3$ und $C(CH_3)_2$; $R^1$ und $R^2$, gleich zueinander oder verschieden voneinander, Methyl-, Ethyl- oder Isopropylreste darstellen; und $R^3$ und $R^4$ Wasserstoffatome darstellen.

7. Verfahren nach Anspruch 5 oder 6, worin in der Verbindung der Formel (I) $R^6$ und $R^8$ Wasserstoffatome darstellen; $R^7$ ein Wasserstoffatom oder einen $C_1$-$C_{20}$-Alkylrest darstellt; und $R^{10}$ einen linearen oder verzweigten $C_1$-$C_{20}$-Alkylrest darstellt.

8. Verfahren nach einem der Ansprüche 5-7, worin in der Verbindung der Formel (I) $R^5$ und $R^9$ Teile der Formel (III) darstellen:

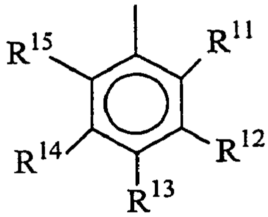

(IIIa)

worin

$R^{11}$, $R^{12}$, $R^{13}$, $R^{14}$ und $R^{15}$, gleich zueinander oder verschieden voreinander, Wasserstoffatome oder lineare oder verzweigte, gesättigte oder ungesättigte $C_1$-$C_{20}$-Alkyl-, $C_3$-$C_{20}$-Cycloalkyl-, $C_6$-$C_{20}$-Aryl-, $C_7$-$C_{20}$-Alkylaryl- oder $C_7$-$C_{20}$-Arylalkylreste darstellen, die optional ein oder mehr Heteroatom(e) enthalten, die zu den Gruppen 13-17 des Periodensystems der Elemente gehören; oder zwei oder mehr $R^{11}$, $R^{12}$, $R^{13}$, $R^{14}$ und $R^{15}$ sich zum Bilden eines 4-bis 7-gliedrigen gesättigten oder ungesättigten Rings verbinden können, wobei der Ring $C_1$-$C_{10}$-Alkylsubstituenten tragen kann;

**9.** Verfahren nach Anspruch 8, worin im Teil der Formel (III) mindestens eine Gruppe unter $R^{11}$, $R^{12}$, $R^{13}$, $R^{14}$ und $R^{15}$ einen linearen oder verzweigten, gesättigten oder ungesättigten $C_1$-$C_{20}$-Alkylrest darstellt.

**10.** Verfahren nach einem der Ansprüche 5-9, worin in der Verbindung der Formel (I) die T gleich sind und sie die Formel (IIa) aufweisen.

**11.** Verfahren nach einem der Ansprüche 5-9, worin in der Verbindung der Formel (I) die T gleich sind und sie die Formel (IIb) aufweisen.

**12.** Verfahren nach einem der Ansprüche 5-9, worin in der Verbindung der Formel (I) die T verschieden sind und sie die Formeln (IIb) und (IIa) aufweisen.

**13.** Verfahren nach einem der Ansprüche 1-12, worin das Katalysatorsystem auf einem porösen organischen Polymer geträgert ist.

**14.** Verfahren nach einem der Ansprüche 1-13, worin Schritt a) ferner einen Vorpolymerisationsschritt a-1) umfasst.

**15.** Verfahren nach einem der Ansprüche 1-14, worin Schritt a) in der Anwesenheit von Wasserstoff durchgeführt wird.

**16.** Verfahren nach einem der Ansprüche 1-15, worin in Schritt a) von 30 Gew.-% bis 70 Gew.% eines Propylen-Homopolymers oder Propylen-Copolymers, enthaltend bis zu 20 Mol-% von abgeleiteten Ethyleneinheiten, oder ein oder mehr $\alpha$-Olefin(e) der Formel $CH_2$=$CHT^1$ hergestellt werden.

**17.** Verfahren nach einem der Ansprüche 1-6, worin in Schritt b) von 30 Gew.-% bis 70 Gew.-% eines Ethylen-Copolymers mit von 4 Mol-% bis 60 Mol-% abgeleiteter Comonomer-Einheiten der Formel $CH_2$=$CHT^1$ und optional bis zu 20 % abgeleiteter nicht konjugierter Dien-Einheiten hergestellt werden.

**18.** Verfahren nach einem der Ansprüche 1-17, worin in Schritt a) ein Propylen-Homopolymer hergestellt wird.

**19.** Verfahren nach einem der Ansprüche 1-18, worin in Schritt b) ein Ethylen-1-Buten-Copolymer hergestellt wird.

## Revendications

**1.** Procédé en plusieurs étapes, comprenant les étapes suivantes :

a) polymérisation de propylène avec, éventuellement, un ou plusieurs monomères choisis parmi l'éthylène et les alpha-oléfines de formule $CH_2=CHT^1$, où $T^1$ représente un radical $C_2$-$C_{20}$-alkyle, en présence d'un système de catalyseurs supporté sur un support inerte comprenant ;

i) un composé de type métal de transition contenant un ligand présentant un squelette cyclopentadiényle ; et
ii) un aluminoxane ou un composé capable de former un cation de type alkylmétallocène ;

b) mise en contact, dans des conditions de polymérisation, dans une phase gazeuse, d'éthylène avec une ou plusieurs alpha-oléfines de formule $CH_2=CHT^1$, où $T^1$ représente un radical $C_2$-$C_{20}$-alkyle, et éventuellement un diène non conjugué, en présence du polymère obtenu dans l'étape a), et en présence d'hydrogène, le rapport pondéral hydrogène/éthylène étant supérieur à 1 ppm ;

où la quantité de polymère obtenue dans l'étape a) se situe dans la plage de 5% en poids à 90% en poids du polymère obtenu dans le procédé complet et la quantité de polymère obtenue dans l'étape b) se situe dans la plage de 10% en poids à 95% en poids du polymère obtenu dans le procédé complet.

**2.** Procédé selon la revendication 1, dans lequel l'étape b) est effectuée en présence d'un composé organique de l'aluminium supplémentaire.

**3.** Procédé selon les revendications 1-2, dans lequel le système de catalyseur comprend en outre

iii) un composé organique de l'aluminium.

**4.** Procédé selon l'une quelconque des revendications 1-3, dans lequel le rapport pondéral hydrogène/éthylène présent pendant la réaction de polymérisation dans l'étape b) se situe dans la plage de 5 à 2000 ppm.

**5.** Procédé selon l'une quelconque des revendications 1-4, dans lequel les composés de type métal de transition contenant un ligand présentant un squelette cyclopentadiényle présentent la formule (I) :

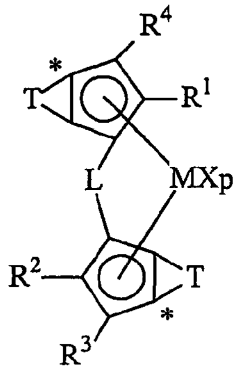

(I)

où :

M est un atome d'un métal de transition choisi parmi ceux appartenant au groupe 3, 4, 5, 6 ou aux groupes des lanthanides ou des actinides dans le tableau périodique des éléments ;
p est un entier de 0 à 3, étant égal à l'étage d'oxydation formel du métal M moins 2;
X, identique ou différent, représente un atome d'hydrogène, un atome d'halogène ou un groupe R, OR, $OSO_2CF_3$, OCOR, SR, $NR_2$ ou $PR_2$, où R représente un radical $C_1$-$C_{20}$-alkyle linéaire ou ramifié, saturé ou insaturé, $C_3$-$C_{20}$-cycloalkyle, $C_6$-$C_{20}$-aryle, $C_7$-$C_{20}$-alkylaryle ou $C_7$-$C_{20}$-arylalkyle, contenant éventuellement des hétéroatomes appartenant aux groupes 13-17 du tableau périodique des éléments ; ou deux X peuvent éventuellement former un radical butadiényle substitué ou non substitué ou un groupe OR'O où R' est un radical divalent choisi parmi les radicaux $C_1$-$C_{20}$-alkylidène, $C_6$-$C_{40}$-arylidène, $C_7$-$C_{40}$-alkylarylidène et $C_7$-$C_{40}$-arylalkylidène ;
L est un groupe formant un pont, divalent, choisi parmi les radicaux $C_1$-$C_{20}$-alkylidène, $C_3$-$C_{20}$-cycloalkylidène,

$C_6$-$C_{20}$-arylidène, $C_7$-$C_{20}$-alkylarylidène ou $C_7$-$C_{20}$-arylalkylidène, contenant éventuellement des hétéroatomes appartenant aux groupes 13-17 du tableau périodique des éléments, et un radical silylidène contenant jusqu'à 5 atomes de silicium ;

$R^1$, $R^2$, $R^3$ et $R^4$, identiques ou différents les uns des autres, représentent des atomes d'hydrogène ou des radicaux $C_1$-$C_{20}$-alkyle linéaires ou ramifiés, saturés ou insaturés, $C_3$-$C_{20}$-cycloalkyle, $C_6$-$C_{20}$-aryle, $C_7$-$C_{40}$-alkylaryle ou $C_7$-$C_{40}$-arylalkyle, contenant éventuellement un ou plusieurs hétéroatomes appartenant aux groupes 13-17du tableau périodique des éléments ;

T, identique ou différent l'un de l'autre, représente un fragment de formule (IIa) ou (IIb) :

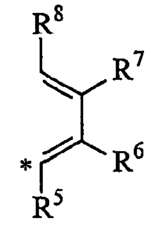

(IIa)

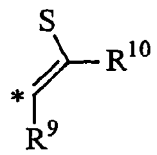

(IIb)

où :

l'atome marqué par le symbole * se lie à l'atome marqué par le même symbole dans le composé de formule (I) ;

$R^5$, $R^6$, $R^7$, $R^8$, $R^9$ et $R^{10}$, identiques ou différents les uns des autres, représentent des atomes d'hydrogène ou des radicaux $C_1$-$C_{40}$-alkyle linéaires ou ramifiés, saturés ou insaturés, $C_3$-$C_{40}$-cycloalkyle, $C_6$-$C_{40}$-aryle, $C_7$-$C_{40}$-alkylaryle ou $C_7$-$C_{40}$-arylalkyle, contenant éventuellement un ou plusieurs hétéroatomes appartenant aux groupes 13-17 du tableau périodique des éléments ; ou deux $R^3$, $R^4$, $R^5$, $R^6$ et $R^7$ ou plus peuvent se rejoindre pour former un cycle à 4-7 chaînons, saturé ou insaturé, ledit cycle pouvant porter des substituants $C_1$-$C_{20}$-alkyle.

**6.** Procédé selon la revendication 5, dans lequel, dans le composé de formule (I), M représente titane, zirconium ou hafnium ; p vaut 2 ; X représente un atome d'hydrogène, un atome d'halogène ou un groupe R, où R est défini comme dans la revendication 1 ; L est choisi dans le groupe constitué par $Si(CH_3)_2$, $SiPh_2$, SiPhMe, $SiMe(SiMe_3)$, $CH_2$, $(CH_2)_2$, $(CH_2)_3$ et $C(CH_3)_2$ ; $R^1$ et $R^2$, égaux ou différents l'un de l'autre, représentent des radicaux méthyle, éthyle ou isopropyle ; et $R^3$ et $R^4$ représentent des atomes d'hydrogène.

**7.** Procédé selon les revendications 5 ou 6, dans lequel, dans le composé de formule (I), $R^6$ et $R^8$ représentent des atomes d'hydrogène ; $R^7$ représente un atome d'hydrogène ou un radical $C_1$-$C_{20}$-alkyle ; et $R^{10}$ représente un radical $C_1$-$C_{20}$-alkyle linéaire ou ramifié.

**8.** Procédé selon l'une quelconque des revendications 5-7, dans lequel, dans le composé de formule (I), $R^5$ et $R^9$ sont des fragments de formule (III) :

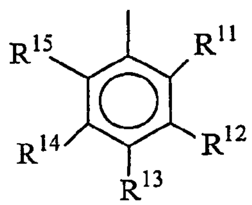

(IIIa)

où

$R^{11}$, $R^{12}$, $R^{13}$, $R^{14}$ et $R^{15}$, égaux ou différents les uns des autres, représentent des atomes d'hydrogène, ou des radicaux $C_1$-$C_{20}$-alkyle linéaires ou ramifiés, saturés ou insaturés, $C_3$-$C_{20}$-cycloalkyle, $C_6$-$C_{20}$-aryle, $C_7$-$C_{20}$-alkylaryle, ou $C_7$-$C_{20}$-arylalkyle, contenant éventuellement un ou plusieurs hétéroatomes appartenant aux groupes 13-17 du tableau périodique des éléments ; ou deux $R^{11}$, $R^{12}$, $R^{13}$, $R^{14}$ et $R^{15}$ ou plus peuvent se rejoindre pour former un cycle à 4-7 chaînons saturé ou insaturé, ledit cycle pouvant porter des substituants $C_1$-$C_{10}$-alkyle ;

**9.** Procédé selon la revendication 8, dans lequel, dans le fragment de formule (III), au moins un groupe parmi $R^{11}$, $R^{12}$, $R^{13}$, $R^{14}$ et $R^{15}$ représente un radical $C_1$-$C_{20}$-alkyle linéaire ou ramifié, saturé ou insaturé.

**10.** Procédé selon l'une quelconque des revendications 5-9, dans lequel, dans le composé de formule (I), les fragments T sont identiques et présentent la formule (IIa).

**11.** Procédé selon l'une quelconque des revendications 5-9, dans lequel, dans le composé de formule (I), les fragments T sont identiques et présentent la formule (IIb).

**12.** Procédé selon l'une quelconque des revendications 5-9, dans lequel, dans le composé de formule (I), les fragments T sont différents et présentent les formules (IIb) et (IIa).

**13.** Procédé selon l'une quelconque des revendications 1-12, dans lequel le système de catalyseur est supporté sur un polymère organique poreux.

**14.** Procédé selon l'une quelconque des revendications 1-13, dans lequel l'étape a) comprend en outre une étape de prépolymérisation a-1).

**15.** Procédé selon l'une quelconque des revendications 1 à 14, dans lequel l'étape a) est effectuée en présence d'hydrogène.

**16.** Procédé selon l'une quelconque des revendications 1 à 15, dans lequel, dans l'étape a), on produit 30% à 70% en poids d'un homopolymère de propylène ou d'un copolymère de propylène contenant jusqu'à 20% en mole d'unités dérivées de l'éthylène ou d'une ou de plusieurs alpha-oléfines de formule $CH_2$=$CHT^1$.

**17.** Procédé selon l'une quelconque des revendications 1 à 16, dans lequel, dans l'étape b), on produit 30% à 70% en poids d'un copolymère d'éthylène comprenant 4% en mole à 60% en mole d'unités dérivées de comonomères de formule $CH_2$=$CHT^1$ et éventuellement jusqu'à 20% d'unités dérivées de diène non conjugué.

**18.** Procédé selon l'une quelconque des revendications 1 à 17, dans lequel, dans l'étape a), on produit un homopolymère de propylène.

**19.** Procédé selon l'une quelconque des revendications 1 à 18, dans lequel, dans l'étape b), on produit un copolymère d'éthylène et de 1-butène.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5854354 A
- US P5145819 A
- US P5786432 A
- US P5830821 A
- EP 0485823 A
- WO 9822486 A
- WO 0144318 A
- WO 9840331 A
- WO 0148034 A
- EP 0213552 W
- DE 10324541
- WO 0146272 A
- WO 02051887 A
- WO 0144319 A
- WO 9921899 A
- WO 0121674 A
- WO 9102012 A
- WO 9200333 A
- WO 0162764 A
- DE 19962814 A
- DE 19962910 A
- WO 9526369 A